Europäisches Patentamt

European Patent Office

Office européen des brevets

(11) Publication number: 0 242 683

A2

# EUROPEAN PATENT APPLICATION

(21) Application number: 87105047.2

(22) Date of filing: 04.04.87

(51) Int. Cl.4: **A01K 1/015** , C09K 3/32

(30) Priority: 18.04.86 GB 8609561

(43) Date of publication of application:
28.10.87 Bulletin 87/44

(84) Designated Contracting States:
BE CH DE ES FR GB IT LI NL SE

(71) Applicant: Laporte Industries Limited
Hanover House 14 Hanover Square
London W1R 0BE(GB)

(72) Inventor: Parish, Raymond H.J.
61, Lyndhurst Drive, Montreal Park Riverhead
Sevenoaks Kent(GB)
Inventor: Cummerson, David A.
4, Pasture Drive Croft
Warrington Cheshire, WA3 7LH(GB)

(74) Representative: ffrench-Lynch, Cecil et al
Laporte Industries Ltd., Group Patent
Department, P.O. Box 2, Moorfield Road
Widnes, Cheshire WA8 0JU(GB)

(54) Litter for animals or birds.

(57) Litter, for example for cats, comprises an inorganic liquid adsorbent material for example a clay, together with a zeolite, for example clinoptilolite, chabazite or synthetic zeolite A. The litter may be in the form of composite particles containing both clay and zeolite particles. The litter has reduced malodour in use.

EP 0 242 683 A2

## Litter for Animals or Birds

A great quantity of particulate adsorbent material is produced and marketed as a small animal or bird litter with the purpose of alleviating the problem of biological waste material disposal for the owners.

The problem referred to above is particularly severe in relation to cats, the urine of which can have a particularly disagreeable odour.

Natural clays in particulate form have been widely used as litter because of their liquid adsorbent properties. Such clays may be selected from the smectite group, for example from the montmorilonites, from the palygorskite group, for example from the sepiolites or the attapulgites, from the kaolinite group, for example from the kaolinites themselves, or from any other groups of clay minerals providing suitable adsorbency properties. Natural calcium montmorillonites such as, for example, the products known as "Fullers' earth" or "Surrey Powder" have been found to possess suitable adsorbency properties for use as litter. "Surrey Powder" is a Trade Name for a product available from Laporte Industries Limited, "Fullers' earth" is a colloquial name for calcium montmorillonite. Additionally, particulate inorganic materials which are not clay minerals have been used as liquid-adsorbent extenders for natural clay in litter or even as replacements therefor. Examples of such materials are calcium sulphate (e.g. gypsum) particles which may be produced by the process described in United Kingdom Patent Specification No. 2011873 or Oil-Dri Corporation of America or calcium silicate particles which may be produced in porous form by the process described in United Kingdom Patent Specification No. 2039707 of Effem GmbH. Another inorganic liquid adsorbent material which has been used as a litter product is diatomaceous earth.

Many attempts have been made to improve the properties of inorganic particulate litter materials by increasing the liquid adsorbency thereof. European Patent Specification No. 87001 of Laporte Industries Limited, for example, discloses that particles made by the compaction of low moisture content fines may have increased liquid adsorbency.

United States Patent Specification No. 4187803 of Oil-Dri Corporation of America discloses moistening fines of an adsorbent mineral, such as a calcined fullers' earth, until its pore space is filled, pelletising without forcing the moisture from the pores, and drying the resulting high liquid adsorbency pellets.

It has been found that while an increase in adsorbency reduces the frequency with which a litter must be discarded it has little effect in relation to the odour problem referred to above.

Many expedients have been adopted to reduce the disagreeable nature of the odour of litter which has been used. One expedient, disclosed in a number of publications represented by United States Patent Specification No. 3921581 of Star-Kist Foods Inc., is to include a perfume in the litter, possibly, as in the Specification just referred to, in such a manner as to provide release of the perfume on contact with liquid wastes. Another expedient, disclosed in for example, European Patent Specifications No. 109275 and 109276 is to include in the litter a bacteriostat or a soluble salt of a transition metal, in order to inhibit the development of odours at source.

According to the present invention there is adopted a new approach to the problem of odour control in litters. That approach utilises the gas adsorbency propertiers of zeolites in combination with the liquid adsorbency of inorganic adsorbent materials hitherto used in litters. Accordingly, the present invention provides a litter material comprising a mixture of one or more inorganic liquid-adsorbent materials, excluding zeolites, and one or more zeolites. Preferably the hitherto known inorganic adsorbent material comprises a clay, a diatomaceous earth, calcium sulphate or calcium silicate in particulate form.

The term zeolite is used herein in its usual sense of indicating a crystalline aluminosilicate having a three dimensional structure based on interlinked $SiO_4$ tetrahedra in contrast to the layered structure of clays. Zeolites have a well defined pore structure giving utility, usually for molecular sieve applications. The characteristic pore size of various families of zeolite, whether natural or synthetic, is generally within the range of about 2 to 15 angstroms. Zeolites are more fully described in the Encylcopaedia of Chemical Technology by Kirk-Othmer (Wiley - Interscience) Edition 3, Volume 15 pages 638-654 and in the book Natural Zeolites, Occurrence, Properties, Use (Pergammon) 1978, by Sand and Mumpton.

The one or more zeolites utilised according to this invention may be of natural or synthetic origin the latter tending to be more effective, enabling much smaller quantity to be used, but also being more costly. The zeolites may verysuitably be selected from those having effective pore diameters of from 3 to 9 Angstroms, a number of well known zeolites, for example zeolite X, zeolite Y and zeolite A amongst synthetic zeolites and mordenite and erionite, amongst natural zeolites, falling within this range. Zeolites having effective pore diameters of from 3 to 5 Angstroms have proved particularly useful. The zeolite preferably contains less than 20% wt moisture, particularly preferably less than 15% wt moisture, for example very suitably from 2% to 14% wt moisture.

A suitable quantity of the zeolite is up to 65% by weight of the litter a particularly preferred quantity being from 0.1% to 25% for example, by weight of the litter. Where the zeolite is a natural zeolite it is preferably used in at least 1% by weight of the litter, for example in from 2% to 10% by weight of the litter. Where the zeolite is a synthetic zeolite it is preferably used in from 0.1% to 3% by weight of the litter. It is understood that this particular preference is at least partly on the basis of zeolite being more expensive than certain inorganic liquid adsorbents. If this situation does not apply in relation to particular litter constituents according to the invention it may be preferred to use up to 65% by weight of zeolite at which point the liquid adsorbency of the litter may start to be adversely effected.

The mechanism by which the presence of zeolite improves the odour retention properties of used litter is not understood. It is noted that many zeolites have a particular adsorptive affinity for ammonium compounds which may be responsible, in part, for litter odour. Further, the macropore diameter of zeolites of up to 36 angstroms would enable the adsorption of mercaptans and sulphides, which are believed also to contribute to litter odour within the zeolite. The three dimensional structure of zeolites would be expected to provide a better adsorbate retention than the laminar, and possibly partly delaminated, structure of clays. It is believed that the improvement may not be associated with liquid adsorbency since zeolites often have a lower liquid adsorbency than, for example, a clay mineral with which it may be combined in a litter. While not being bound to the accuracy of the above speculation the applicant has found that zeolites having pores and/or macropores of a suitable diameter to adsorb the odorous materials mentioned, or a proportion of them, are effective in the circumstances of use.

While a litter comprising a mere admixture of particles of zeolite and particles of inorganic liquid adsorbent material is within the scope of this invention it is preferred to form composite particles of litter including particles of both the inorganic liquid adsorbent material and of the zeolite in a substantially homogenous admixture.

The particle size of a litter product is generally in about the 250 micron to 6mm diameter size range. Where the preferred composite litter particles of the present invention are to be produced the inorganic liquid-adsorbent and the zeolite are preferably each included as particles of which the major proportion by weight is in the 45 to 710 micron size range. The composite particles are preferably produced by the process described in European Patent Specification No. 87001 according to which the clay particles to be included in the litter are in a form in which they contain not more than 15% for example from 0.5% to 15% or very suitably from 2% to 14% by weight of moisture. These particles are suitably mixed with the zeolite particles and may then be compacted, for example between rolls at a pressure of from 5 to 500 KN per cm of roll length or in a press having opposed relatively movable plates at a pressure of from 0.5 to 200KN per sqcm, to form composite compacted masses which may then be broken up into particles in the desired range for final use. The rolls and the plates just referred to may alternatively have contoured surfaces designed to produce discretely shaped compacted masses.

The present invention will now be illustrated by means of the following examples of which Examples 2 and 6 to 8 are according to this invention, Examples 1 and 5 being controls, Examples 3 and 4 showing, by way of comparison, the use of transition metal salts as odour control agents and Example 9 showing by way of comparison, the use of a litter consisting of a natural zeolite.

A quantity of natural calcium montmorillonite having particle sizes substantially in the range 45 microns to 710 microns and a moisture content of about 10% wt was divided into a number of samples and, except for the control sample was mixed with a quantity of an additive identified in the Table below. The mixture in each case was passed between smooth rolls operating at a pressure of 10KN/cm of roll length and at a speed maintained between 12 and 14 revolutions per minute. The resulting compacted flakes were crushed and screened to give granules having a nominal 2mm-5mm particle size.

Examples 1-4 (Booth tests).

The additives are identified below.

Example 1

Control. No additive

Example 2

5%, by weight of the clay and additive, of clinoptilolite natural zeolite as powder having an approximate water content of 10% wt and having a particle size in the 105 to 710 micron range and having an effective pore diameter of about 3.7 to 4.3 Angstroms.

Example 3

500 parts per million, by weight of the clay and additive, of a solid powdered sodium sulphate/sodium copper citrate 1:1 molar mixture.

Example 4

1000 parts per million, by weight of the clay and additive, of the sodium sulphate/sodium copper citrate mixture as used in Sample 3.

The effectiveness of the samples was tested by damping them with cat urine and, at the below stated intervals thereafter, having testers assess the odours. Each sample was placed in a separate canvas testing booth having an openable vent through which the testers could pass their heads into the booth. The odours were assessed on a subjective scale of 0 to 10, 0 representing no detectable malodour and 10 representing an overpowering malodour.

The results of a large number of tests were averaged to give the following results.

| | Test time intervals – hours | | | | |
|---|---|---|---|---|---|
| Example | 1 | 4 | 6 | 24 | 48 |
| 1. | 3.9 | 2.7 | 3.3 | 2.0 | 2.3 |
| 2. | 3.7 | 1.9 | 2.8 | 2.2 | 1.5 |
| 3. | 4.6 | 2.5 | 2.4 | 2.2 | 2.2 |
| 4. | 3.9 | 2.1 | 2.4 | 2.7 | 2.1 |

Examples 5-9 (Jar tests)

The additives used are identified below.

Example 5

Control. No additive.

Example 6

2.0%, by weight of the clay and additive of chabazite natural zeolite as a powder having an approximate water content of 10% and a majority by weight in the sub 710 micron particle size range and an effective pore diameter of about 4 Angstroms.

Example 7

2.0% on the same basis of clinoptilolite natural zeolite having similar pore diameter, water content and particle size to that used in Example 6.

4

Example 8

0.3%, on the same basis of synthetic sodium zeolite A, having a similar water content and particle size to the zeolite used in Example 6 and a pore diameter of about 3.5 to 4 Angstroms.

Example 9

The litter consisted of the clinoptilolite natural zeolite as used in Example 7 compacted and crushed in the same manner as used to produce the granules of the preceding examples.

The effectiveness of the litters of Examples 5-9 was tested by placing 800g of the litter damped with 50ml of homogenised cat's urine in each of a number of l.5 litre glass jars having screw lids and having testers assess the odours on the same basis as in Examples l-4 by carefully removing the lids without disturbing the air in the jars, smelling and replacing the lids.

The results of a large number of tests were averaged to give the following results rounded to the nearest single decimal place.

| Example | Average malodour score |
|---------|------------------------|
| 5 | 8.3 |
| 6 | 6.8 |
| 7 | 6.4 |
| 8 | 7.0 |
| 9 | 6.8 |

The results of Examples l-9 are commented upon as follows. The higher average scores in Examples 5-9 are attributed to the different method of testing in comparison with Examples l-4. In Example 2 the use of 5% by weight of a zeolite additive gives a clear advantage over the use of a clay without additives or with transition metal salt additives. In Examples 6-8 the use of natural or synthetic zeolite additives give a clear advantage over the use of a clay without additives and give a substantially similar performance to that obtained in Example 9 from the use of a litter consisting wholly of a zeolite, although it is noted that Example 7 using 2% of clinoptilolite gave a somewhat better result to Example 9 using a litter wholly consisting of the same zeolite.

## Claims

l. A litter comprising particles of an inorganic liquid-adsorbent material characterised in that the particles also contain one or more zeolites.

2. A litter as claimed in claim l wherein the liquid-adsorbing material is a clay a diatomaceous earth, calcium sulphate or calcium silicate.

3. A litter as claimed in claim l or 2 wherein the one or more zeolites has an effective pore diameter of from 3 to 9 Angstroms.

4. A litter as claimed in any preceding claim wherein the one or more zeolites comprises up to 65% by weight of the litter.

5. A litter as claimed in claim 4 wherein the one or more zeolites comprises from 0.l% to 25% by weight of the litter.

6. A litter as claimed in any preceding claim of which the particles comprise a homogenous mixture of particles of the liquid-adsorbent material with particles of the one or more zeolites.

7. A litter as claimed in claim 6 wherein the major proportions of the liquid-adsorbent material and of the one or more zeolites, by weight, are each in the 45 micron to 7l0 micron size range.

8. A litter as claimed in any preceding claim wherein the particles of litter comprise a pressure compacted mixture of the liquid-adsorbent material and of the one or more zeolites.